# EUROPÄISCHE PATENTSCHRIFT

(11) **EP 3 549 745 B1**
(45) Veröffentlichungstag und Bekanntmachung des Hinweises auf die Patenterteilung: **07.12.2022**
(21) Anmeldenummer: 19163992.1
(22) Anmeldetag: 20.03.2019
(51) Int. Cl.: B29C 63/42, B65C 3/06

(54) **VERBESSERTER SLEEVE-UMFALTKEIL**
IMPROVED SLEEVE FOLDING WEDGE
CALE DE PLIAGE DE MANCHES AMÉLIORÉE

(30) Priorität: 22.03.2018 DE 202018101592 U
(43) Veröffentlichungstag der Anmeldung: 09.10.2019
(73) Patentinhaber: KRONES Aktiengesellschaft, 93073 Neutraubling (DE)
(72) Erfinder: Kupka, Martin, 93073 Neutraubling (DE); Krieger, Robert, 93073 Neutraubling (DE)
(74) Vertreter: Grünecker Patent- und Rechtsanwälte PartG mbB

(56) Entgegenhaltungen:
- EP-A1- 2 551 206
- WO-A1-2015/164954
- DE-A1-102016 212 155
- JP-A- 2004 059 091
- JP-A- 2006 076 629
- US-A- 4 693 059
- US-A- 5 466 210

## Beschreibung

### Stand der Technik

Die Erfindung betrifft einen Umfaltkeil der im Oberbegriff des Anspruchs 1 angegebenen Art sowie eine Etikettiervorrichtung der im Oberbegriff des Anspruchs 9 angegebenen Art.

In der Etikettiertechnik in der Getränke- und Verpackungsindustrie werden beispielsweise Behälter unter anderem mit Etikettenhülsen ausgestattet bzw. etikettiert, wobei besagte Etikettenhülsen beispielsweise aus Folienschläuchen, auch als Foliensleeves bezeichenbar, abgetrennt werden können. Dabei können die Folienschläuche bzw. die Foliensleeves z.B. von einer Rolle, z.B. als gefaltete Folienschläuche auf einer Endlosrolle, abgerollt werden und einer Etikettiervorrichtung zur Verarbeitung zur Verfügung gestellt werden. Bei der Handhabung der Folienschläuche bzw. der Foliensleeves können unter anderem sogenannte Umfaltkeile bzw. Faltkeile eingesetzt werden, um die Folienschläuche bzw. der Foliensleeves umzufalten und die Transportführung der Folienschläuche beispielsweise vor oder innerhalb einer Etikettiervorrichtung zu erleichtern.

Insbesondere können die Umfaltkeile bzw. Faltkeile beispielsweise Orientierungsänderungen der Folienschläuche während des Transportierens bzw. während der Führung der Folienschläuche ermöglichen, ohne dass es dabei z.B. zu einem unerwünschten Verdrillen der Folienschläuche kommt.

Besagte beispielhafte Umfaltkeile können dabei schwimmend im handzuhabenden Folienschlauch bzw. im Foliensleeve gelagert sein.

Nachteilig bei bekannten Umfaltkeilen bzw. Faltkeilen, wie beispielsweise in der DE 10 2016 21 21 55 beschrieben ist mitunter, dass diese Folienschläuche leicht verschleißen können, Faltbreitschwankungen von auf Rollen gefalteten Folienschläuche nicht ausgleichen können, und die Folienschläuche oft zu ungenau führen, was insbesondere zu fehlerhaften Etikettiervorgängen und hohem Ausschuss an Folienschläuchen bzw. Etikettenhülsen und fehlerhaft etikettierten Gegenständen, z.B. Behälter, führen kann.

Das Dokument EP 2 551 206 A1 offenbart einen Umfaltkeil nach dem Oberbegriff des Anspruchs 1.

### Aufgabe

Es ist somit Aufgabe der Erfindung einen Umfaltkeil bzw. einen Faltkeil für Folienschläuche bzw. Foliensleeves, bzw. eine Etikettiervorrichtung zu verbessern, insbesondere beispielsweise hinsichtlich der Effizienz, Genauigkeit der Führung der Folienschläuche bzw. Foliensleeves, Genauigkeit der Etikettiervorgänge und Verschleißminderung an Folienschläuchen.

### Lösung

Dies wird erfindungsgemäß durch einen Umfaltkeil nach Anspruch 1 und eine Etikettiervorrichtung nach Anspruch 9 erreicht. Vorteilhafte Ausführungsformen und Weiterbildungen sind Gegenstand der Unteransprüche.

Ein derartiger beispielhafter Umfaltkeil bzw. Faltkeil zur Handhabung von Folienschläuchen bzw. Foliensleeves kann zu einem deutlich verringerten Verschleiß der Folienschläuche führen. Bei einer schwimmenden Lagerung des Umfaltkeils, bei der der Umfaltkeil von einem Folienschlauch bzw. Foliensleeve umflossen werden kann, kann der Abrieb bzw. die Reibung zwischen dem Umfaltkeil und dem Folienschlauch bzw. dem Foliensleeve im Vergleich zu herkömmlichen Umfaltkeilen deutlich reduziert werden.

Zudem kann ein derartiger beispielhafter Umfaltkeil bzw. Faltkeil zur Handhabung von Folienschläuchen bzw. Foliensleeves das Aufspreizen bzw. das Aufspannen und insbesondere das Umfalten eines Folienschlauchs bzw. Foliensleeves durch den Umfaltkeil erleichtern.

Ein derartiger beispielhafter Umfaltkeil bzw. Faltkeil zur Handhabung von Folienschläuchen bzw. Foliensleeves kann dabei insbesondere frei von hakenförmigen Elementen sein.

Dabei kann im Übrigen der Umfaltkeil ein dem auslaufseitigen Ende gegenüberliegendes Ende, z.B. ein einlaufseitiges Ende, aufweisen, wobei die Enden zueinander verdreht sein können, beispielsweise orthogonal zueinander verdreht sein können.

Dies kann beispielsweise das Ändern der Orientierung der Folienschläuche z.B. in Bezug auf eine Transportrichtung bzw. Förderrichtung während des Transportierens bzw. der Führung der Folienschläuche erleichtern.

In anderen Worten kann der Faltkeil bzw. Umfaltkeil so ausgeführt sein, dass er einander entgegengesetzte und zueinander verdrehte Enden bzw. Schneiden, z.B. ein einlaufseitiges Ende / eine einlaufseitige Schneide und ein auslaufseitiges Ende / eine auslaufseitige Schneide, bzw. schneidenförmige Enden aufweisen kann, insbesondere beispielsweise zueinander orthogonal verdrehte Enden bzw. Schneiden bzw. schneidenförmige Enden.

Ein beispielhafter Umfaltkeil kann dabei beispielsweise eine Länge von 200 - 400 mm, insbesondere beispielsweise eine Länge von etwa 320 mm aufweisen.

Je nach Breite des zu handhabenden Folienschlauches bzw. je nach gewünschter Faltbreite, z.B. Faltbreiten zwischen 20 - 300 mm, insbesondere zwischen 60 - 200 mm, kann der beispielhafte Umfaltkeil jedoch auch anders dimensioniert sein.

Beispielsweise kann der Keilwinkel des einlaufseitigen Endes des Umfaltkeils und/oder der Keilwinkel des auslaufseitigen Endes des Umfaltkeils von der Länge des Umfaltkeils bzw. von der gewünschten Faltbreite abhängen und z.B. zwischen 3° und 45° liegen, insbesondere beispielsweise zwischen 6° (z.B. bei einer Faltbreite von 60 mm) und 33° (z.B. bei einer Faltbreite von 200 mm).

Der Keilwinkel des einlaufseitigen Endes des Umfaltkeils und der Keilwinkel des auslaufseitigen Endes des Umfaltkeils können sich dabei voneinander unterscheiden, z.B. geringfügig (z.B. um weniger als 1°) voneinander unterscheiden, oder gleich sein.

Unter einer beispielhaften Änderung einer Orientierung eines Folienschlauches kann beispielsweise die Änderung eines Rollwinkels verstanden werden, wobei besagter beispielhafte Rollwinkel, eine / die Drehlage eines flach gefalteten Querschnitts eines Folienschlauchs bezüglich einer beliebigen / vorgebbaren Referenzdrehlage des Folienschlauchs in einer / der Transportrichtung definieren kann.

Die Rollelemente sind federnd gelagert.

Dies kann es beispielsweise erleichtern, Faltenbreitenschwankungen von aufzufaltenden gefalteten Folienschläuchen auszugleichen.

Anders ausgedrückt kann sich der beispielhafte Umfaltkeil optimal der Geometrie des jeweiligen aufzufaltenden bzw. umzufaltenden Folienschlauchs anpassen.

So kann beispielsweise eine verbesserte bzw. gleichbleibend hohe Qualität des Umfalt-Vorgangs und Umfalt-Ergebnisses erzielt werden.

Dies kann schließlich dazu führen, dass die Folienschläuche bzw. Foliensleeves optimal aufgespannt und optimal orientiert bzw. ausgerichtet werden können für eine präzisere Abtrennung von einzelnen Etikettenhülsen aus den Folienschläuchen, insbesondere beispielsweise für ein präziseres Timing eines Abrissvorgangs an einem Dorn einer / der Etikettiervorrichtung.

Diese Verbesserung in der Genauigkeit und Kontrolle der Handhabung der Folienschläuche beim Aufspannen, Umfalten und Abtrennen der Etikettenhülsen kann schließlich auch zu einer verbesserten Genauigkeit bei der Etikettierung von mit den Etikettenhülsen auszustattenden Gegenständen, beispielsweise Behältern führen.

Der beispielhafte Umfaltkeil mit gefederter Aufnahme der Rollelemente kann dabei insbesondere auch verschiedene Folienschlauchformate bzw. verschiedene Folienschlauchbreiten verarbeiten, ohne dass hierzu eine Umrüstung des Umfaltkeils bzw. eine Umrüstung der Etikettiervorrichtung notwendig wäre.

Der beispielhafte Umfaltkeil weist zwei Rollelemente, z.B. zwei Rollen auf, welche jeweils seitlich am auslaufseitigen Ende des Umfaltkeils angeordnet sind.

Dies kann unter anderem ein symmetrisches bzw. gleichförmiges Aufspannen bzw. ein gleichmäßiges Umfalten eines handzuhabenden Folienschlauches erleichtern.

Dabei sind beide Rollelemente federnd gelagert, bzw. jeweils in entsprechend am auslaufseitige Ende des Umfaltkeils angeordneten gefederten Aufnahmen aufgenommen.

Dabei ist es zudem auch vorstellbar, dass zur Erleichterung der Anpassung an verschiedene Folienschlauchtypen oder verschiedenen Folienschlauchformate, das auslaufseitige Ende des beispielhaften Umfaltkeils, einschließlich des Rollelementes und seiner möglichen gefederten Aufnahme, austauschbar sein können.

Das beispielhafte Rollelement / die beispielhaften Rollelemente kann / können beispielsweise ringartig ausgeführt sein, bzw. einen Ring aufweisen der drehbar und optional gefedert gelagert sein kann. Beispielsweise kann ein beispielhaftes Rollelement einen Ring umfassen der auf einer drehbar und beispielsweise gefedert gelagerten Rolle angeordnet bzw. gelagert sein kann.

Das beispielhafte Rollelement / die beispielhaften Rollelemente kann / können dabei beispielsweise Durchmesser zwischen 8 - 25 mm aufweisen, insbesondere beispielsweise einen Durchmesser von etwa 12 mm.

Dabei kann das beispielhafte Rollelement / können die beispielhaften Rollelemente beispielsweise eine Breite zwischen 2 - 6 mm, insbesondere eine Breite von etwa 2,5 mm aufweisen.

Die Rolloberfläche(n) bzw. Rollkontaktoberfläche(n) des beispielhaften Rollelements / der beispielhaften Rollelemente kann dabei gekrümmt sein und beispielsweise einen Radius zwischen 0,5 - 1,5 mm, insbesondere beispielsweise einen Radius von etwa 0,8 mm aufweisen kann.

Dies kann die Umfaltung eines Folienschlauches bzw. das Eindrücken bzw. Ausprägen einer Falte / eines Falzes im Folienschlauch erleichtern und gleichzeitig verhindern, dass der Folienschlauch beim Umfalten beschädigt wird.

Das Material des beispielhaften Rollelements / der beispielhaften Rollelemente kann beispielsweise rostfreien Edelstahl, z.B. 1.4305 oder 1.4301, und/oder Kunststoff, z.B. hochbelastbaren Kunststoff, beispielsweise Polyamid 12 Guss (PA 12 G), umfassen.

Der hierin beispielhaft beschriebene Umfaltkeil bzw. Faltkeil kann dabei z.B. unter anderem mittels eines aufbauenden Rapid Prototyping Verfahrens, wie beispielsweise durch 3D-Druck/Lasersintern, hergestellt werden.

Ein derartig hergestellter Umfaltkeil bzw. Faltkeil kann sich unter anderem durch eine hohe Verschleißfestigkeit sowie im Vergleich zu anderen bekannten Herstellungsverfahren geringere Produktionskosten auszeichnen.

Dabei ist es auch möglich besagte beispielhafte gefederte Aufnahme zur Aufnahme des Rollelements im Rahmen des beispielhaften Rapid Prototyping Verfahrens, beispielsweise durch 3D-Druck/Lasersintern, in den Umfaltkeil bzw. Faltkeil bei der Herstellung zu integrieren.

Ein aufbauendes Rapid Prototyping Verfahren, wie beispielsweise 3D-Druck/Lasersintern, kann zudem auch eine leichtere Bauweise des Umfaltkeils ermöglichen. Beispielsweise können unter anderem Hohlräume oder Aussparungen oder kontinuierliche Materialübergänge im Umfaltkeil bei der Herstellung mittels eines aufbauenden Rapid Prototyping Verfahrens einfacher realisiert werden.

Andere Herstellungsverfahren, wie beispielsweise spanabhebende Verfahren, z.B. Fräsverfahren, zur Herstellung des Umfaltkeils bzw. Faltkeils sind jedoch auch denkbar.

Folgende Figuren stellen beispielhaft dar:
- **Fig.1a:**: Beispielhafte erste Ansicht eines beispielhaften Umfaltkeils
- **Fig.1b:**: Beispielhafte zweite Ansicht eines beispielhaften Umfaltkeils
- **Fig.1c:**: Beispielhafter Querschnitt durch auslaufseitiges Ende eines beispielhaften Umfaltkeils
- **Fig. 1d:**: Beispielhafte dritte Ansicht eines beispielhaften Umfaltkeils
- **Fig. 1e:**: Beispielhafter Ausschnitt der Fig. 1d
- **Fig. 1f:**: Beispielhaftes Rollelement
- **Fig. 1g:**: Beispielhafter erster Querschnitt des beispielhaften Rollelements
- **Fig. 1h:**: Beispielhafter zweiter Querschnitt des beispielhaften Rollelements
- **Fig. 2:**: Beispielhafte Umfaltung eines Folienschlauches
- **Fig. 3:**: Beispielhafter Etikettiervorrichtung
- **Fig. 4:**: Beispielhafte Anordnung eines Umfaltkeil innerhalb eines Teils einer beispielhaften Etikettiervorrichtung

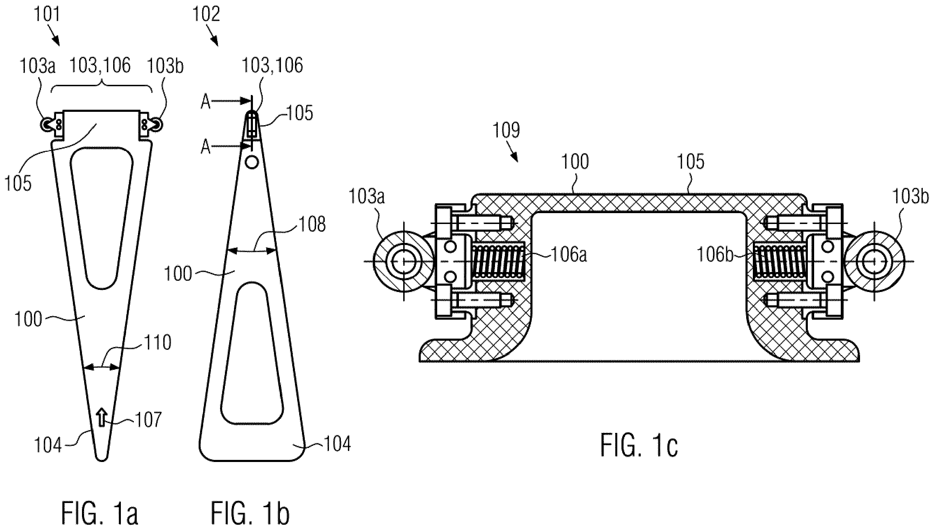

Die Figuren **Fig. 1a, Fig.1b** und **Fig. 1c** zeigen beispielhaft verschiedene Ansichten 101, 102, 109 eines beispielhaften Umfaltkeils 100, wobei die Ansicht 102 den in der Ansicht 101 dargestellten Umfaltkeil nach einer beispielhaften Drehung um 90° Grad um die Längsachse des Umfaltkeils zeigt, und wobei die Ausrichtung der Längsachse des Umfaltkeils beispielsweise gleich oder im Wesentlichen parallel zu einer / der Transportrichtung / Förderrichtung 107 eines Folienschlauchs bzw. Foliensleeves sein kann.

Der beispielhafte Umfaltkeil weist dabei ein beispielhaftes Rollelement 103 auf, welches beispielsweise aus einem Rollenpaar bestehen kann und welches beispielsweise die Rollen 103a und 103b umfassen kann, welche jeweils beispielhaft seitlich am auslaufseitige Ende 105 des Umfaltkeils 100 angeordnet sein können.

Das beispielhaftes Rollelement 103 kann dabei von einer beispielhaften gefederten Aufnahme 106 aufgenommen sein. Dabei kann die beispielhafte gefederte Aufnahme 106 so ausgeführt sein, dass sie eine beispielhafte erste gefederte Aufnahme 106a für besagte beispielhafte erste Rolle 103a, und eine beispielhafte zweite gefederte Aufnahme 106b für besagte beispielhafte zweite Rolle 103b aufweisen kann.

Aus den beiden Ansichten 101, 102 des Umfaltkeils ist ebenfalls beispielhaft zu entnehmen, dass die beiden sich gegenüberliegenden Enden / Schneiden 104,105, also das einlaufseitige Ende 104 und das auslaufseitige Ende 105, beispielsweise orthogonal zueinander verdreht sein können.

Zudem ist ein beispielhafter Keilwinkel des auslaufseitigen Endes 105 des Umfaltkeils mit dem Bezugszeichen 108 gekennzeichnet, sowie ein beispielhafter Keilwinkel des einlaufseitigen Endes 104 des Umfaltkeils mit dem Bezugszeichen 110 gekennzeichnet.

Die Ansicht 109 der **Fig.1c** zeigt einen vergrößerten beispielhaften Querschnitt des Umfaltkeils 100 entlang der Schnittlinie A-A, und worin die beispielhaften Rollen 103b, 103b des Rollelements 103, sowie deren beispielhafte gefederte Aufnahmen 106a, 106b der beispielhaften Aufnahme 106 am auslaufseitigen Ende 105 des beispielhaften Umfaltkeils zu sehen ist.

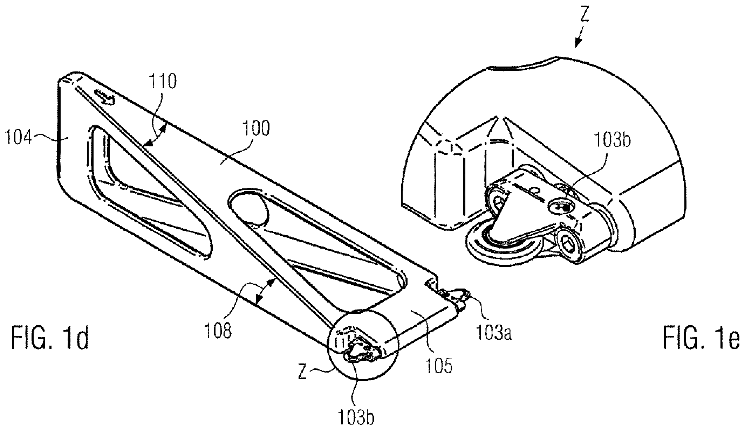

Die **Fig. 1d****,** zeigt beispielhaft eine räumliche Ansicht eines/des beispielhaften Umfaltkeils 100, worin der beispielhafte Keilwinkel 108 des auslaufseitigen Endes 105 und der beispielhafter Keilwinkel 110 des einlaufseitigen Endes 104 des Umfaltkeils gekennzeichnet sind.

Die **Fig. 1e** zeigt beispielhaft eine Vergrößerung des in der **Fig. 1d** mit Z markierten Bereiches, worin das beispielhafte Rollelement 103b vergrößert zu sehen ist.

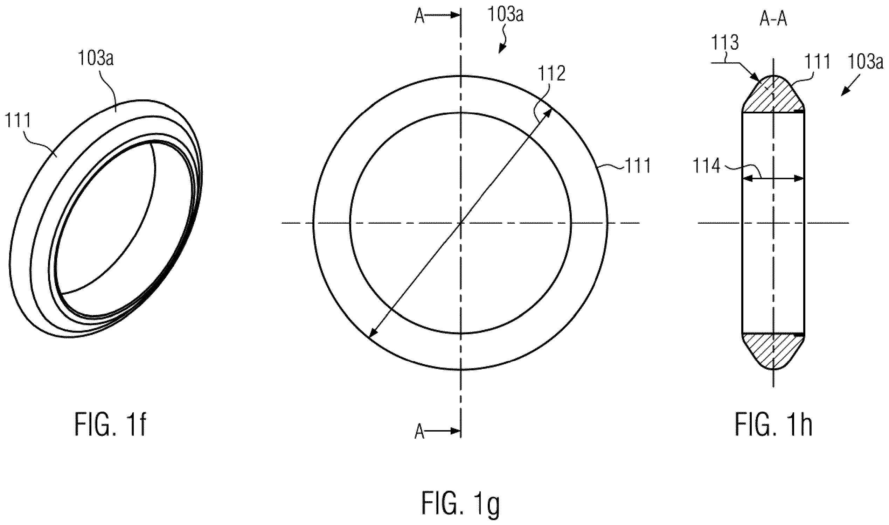

Die **Fig. 1f** zeigt beispielhaft ein ringförmig gestaltetes Rollelement 103a bzw. einen Ring eines beispielhaften Rollelements, worin die beispielhafte Rolloberfläche bzw. Rollkontaktoberfläche, welche mit einem Folienschlauch in Kontakt treten kann, mit dem Bezugszeichen 111 gekennzeichnet ist. Das beispielhafte ringförmige Rollelement 103a kann dabei auf einer drehbar und beispielsweise gefedert gelagerten Rolle (nicht dargestellt) angeordnet bzw. gelagert sein kann.

Die **Fig. 1g** zeigt einen beispielhaften frontalen Querschnitt des Rollelementes 103a bzw. des Rollelementrings, worin der beispielhafte Durchmesser des Rollelementes 103a mit dem Bezugszeichen 112 und die beispielhafte Breite des Rollelementes 103a mit dem Bezugszeichen 114 gekennzeichnet ist.

Die **Fig. 1h** zeigt einen beispielhaften seitlichen Querschnitt des Rollelementes 103a bzw. des Rollelementrings, worin der beispielhafte Radius der beispielhaften Rolloberfläche bzw. Rollkontaktoberfläche 111 des Rollelementes 103a mit dem Bezugszeichen 113 gekennzeichnet ist.

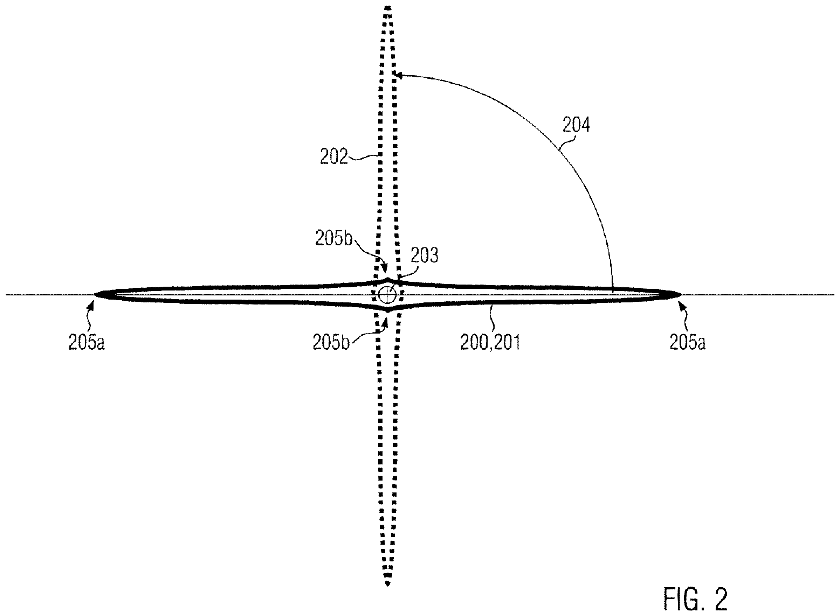

Die **Fig. 2** zeigt schematisch eine beispielhafte Umfaltung bzw. Orientierungsänderung eines beispielsweise entlang der Längsfalzen 205a gefalteten Folienschlauches 200 der entlang einer beispielhaften Transportrichtung 203 gefördert wird um einen beispielhaften Rollwinkel 204, wobei die beispielhafte Orientierungsänderung mit Hilfe eines Umfaltkeils erreicht werden kann.

Hierbei beschreibt der Rollwinkel 204 beispielsweise die Drehlage des flach entlang der Längsfalze 205a gefalteten Querschnitts des Folienschlauchs 200 bezüglich einer beispielhaften Referenzdrehlage 201 des Folienschlauchs 200 in der Transportrichtung 203.

Ein schwimmend im Folienschlauch gelagerte Umfaltkeil (nicht dargestellt), d.h. ein vom Folienschlauch 200 umflossener Umfaltkeil, kann es beispielsweise ermöglichen den Folienschlauch, welcher über den Umfaltkeil gezogen werden kann, in eine beispielhafte zweite Lage bzw. zweite Drehlage 202 zu bringen, in welcher beispielsweise der Folienschlauch entlang der alternativen / zusätzlichen Längsfalze 205b umgefaltet und transportiert werden kann. Die Längsfalze 205b können dabei unter anderem beispielsweise durch den Vorgang der Umfaltung durch den Umfaltkeil entstehen.

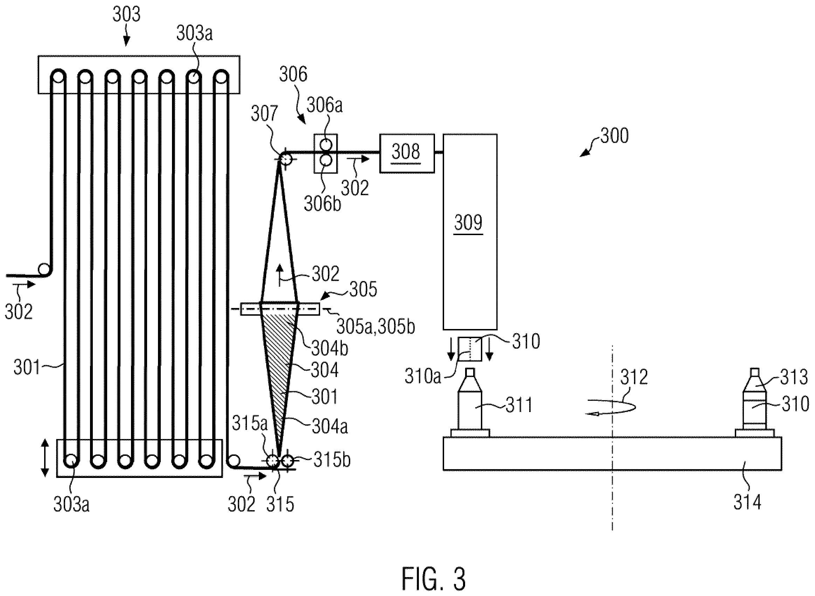

Die **Fig. 3** stellt eine beispielhafte Etikettiervorrichtung 300 dar, welche einen beispielhaften Folienschlauchspeicher 303 aufweisen kann, welcher beispielsweise mehrere Tänzerrollen 303a aufweisen kann, zur Bereitstellung eines beispielhaften Folienschlauchs 302, der entlang der mit dem Bezugszeichen 302 gekennzeichneten beispielhaften Transportrichtung bzw. beispielhaften Transportstrecke, innerhalb der Etikettiervorrichtung 300 unter Zuhilfenahme einer Vielzahl von Rollen bzw. Transportrollen bzw. Umlenkrollen und/oder Lagerrollen 315, 315a, 315b, 305, 305a, 305b, 307 transportiert werden kann.

Ein beispielhafter Umfaltkeil 301 kann dabei beispielsweise schwimmend in einem Folienschlauch 301 zwischen dem Transportrollenpaar/Umlenkrollenpaar 315, 315a, 315b und dem Transportrollenpaar 305, 305a, 305b gelagert sein.

Der Umfaltkeil 301 kann dabei an seiner unteren Schneide bzw. seinem einlaufseitigen Ende 304a zwischen der Umlenkrolle 315a und einer dazu parallelen Lagerrolle 315b schwimmend gelagert sein, und ebenso an seiner oberen Schneide 304 bzw. seinem auslaufseitigem Ende 304b zwischen den Rollen 305a, 305b des Rollenpaars 305. Entsprechend kann der Folienschlauch 301 im Bereich der eingangsseitigen Schneide bzw. dem einlaufseitigen Ende 304a des Umfaltkeils 304 noch an den ursprünglichen Längsfalzen flach gefaltet.

Dagegen kann der Folienschlauch 301 im Bereich der ausgangsseitigen Schneide bzw. dem auslaufseitigen Ende 304b des Umfaltkeils 304 an neuen / zusätzlichen Längsfalzen flach gefaltet sein. Dadurch kann sich z.B. der Rollwinkel des Folienschlauches ohne Verdrillen ändern.

Nach der beispielhaften Umfaltung kann der Folienschlauch 301 beispielsweise einer Perforationseinheit 308 und einem Etikettenspender 309 zugeführt werden, worin Etikettenhülsen 310 aus dem Folienschlauch 301 abgetrennt werden können und auf einen zu etikettieren Gegenstand, zum Beispiel auf einen Behälter 311, 313, auf einem sich drehbar 312 gelagerten Tisch 314, aufgebracht werden können.

In der Fig. 3 ist zudem beispielhaft angedeutet, dass am Folienschlauch 301 ausgebildete Längsfalze generell auch als Längsfalze 310a an den Etikettenhülsen 310 erhalten bleiben können. Die dadurch verursachte Querschnittverformung der Etikettenhülsen 310 kann deren Aufschießen auf die Behälter 311, 313 mitunter erschweren.

Dies lässt sich durch die durch die Umfaltung mittels des Umfaltkeils 304 erzeugten zusätzlichen Längsfalze abmildern, da diese eine gleichmäßigere Querschnittverformung der vom Etikettenspender 309 abgegebenen Etikettenhülsen 310 bewirken können. Die Umfaltung des Folienschlauchs 301 durch den Umfaltkeil 304 kann so einer präziseren und zuverlässigeren Etikettierung dienen.

Darüber hinaus ist eine optionale Rücklaufbremse 306 in der Transportstrecke schematisch dargestellt. Damit lässt sich ein unerwünschtes Zurücklaufen des Folienschlauchs 301 in den Folienschlauchspeicher 303 nach einem Abreißen des Folienschlauchs 4 bei der Vereinzelung zu Etikettenhülsen 310 verhindern. Die Rücklaufbremse 306 kann beispielsweise eine in der Transportrichtung 302 freilaufende und entgegengesetzt blockierende Rolle 306a sowie eine damit korrespondierende Andruckrolle 306b umfassen.

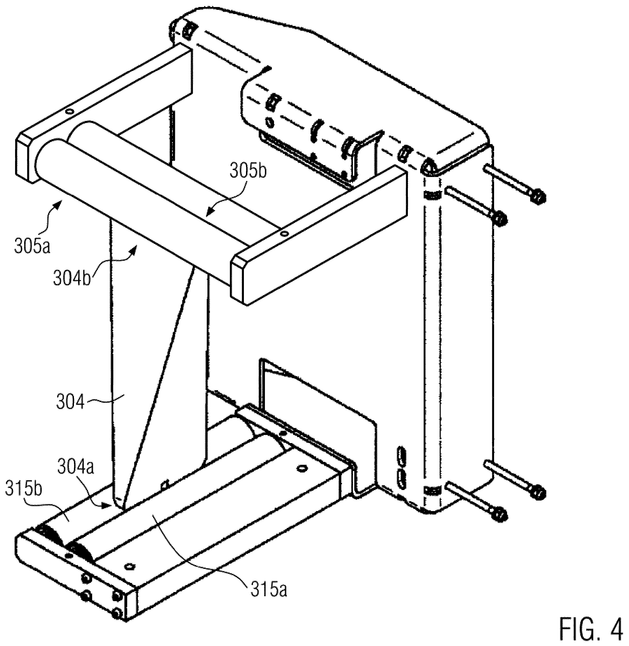

Die **Fig. 4** zeigt eine beispielhafte räumliche Ansicht der in der **Fig. 3** dargestellten Anordnung des schwimmend gelagerten Umfaltkeils 304 zwischen den Rollen 315a, 315b und den Rollen 305a, 305b.

Dabei kann der Umfaltkeil 301 an seiner unteren Schneide bzw. an seinem einlaufseitigen Ende 304a zwischen der Umlenkrolle 315a und einer dazu parallelen Lagerrolle 315b schwimmend gelagert sein, und ebenso schwimmend gelagert sein an seiner oberen Schneide 304 bzw. an seinem auslaufseitigem Ende 304b zwischen den Rollen 305a, 305b des Rollenpaars 305.

Es folgen 6 Blatt mit den Figuren Fig. 1a, Fig. 1b, Fig. 1c, Fig. 1d, Fig. 1e, Fig. 1f, Fig. 1g, Fig. 1h, Fig. 2, Fig. 3 und Fig. 4.

## Patentansprüche

1. Umfaltkeil (100) zur Handhabung von Folienschläuchen einer Etikettiervorrichtung zur Ausstattung von Gegenständen, z.B. Behältern, mit aus den Folienschläuchen abgetrennten Etikettenhülsen, umfassend zwei Rollelemente (103a,103b), welche jeweils seitlich am auslaufseitigen Ende (105) des Umfaltkeils (100) angeordnet sind,
**dadurch gekennzeichnet, dass**
die Rollelemente federnd gelagert sind.

2. Umfaltkeil (100) nach Anspruch 1, wobei der Umfaltkeil (100) ein dem auslaufseitigen Ende (105) gegenüberliegendes einlaufseitiges Ende (104) aufweist, und wobei die beiden Enden zueinander verdreht sind, beispielsweise orthogonal zueinander verdreht sind.

3. Umfaltkeil (100) nach einem der vorherigen Ansprüche, wobei der Umfaltkeil (100) mittels eines aufbauenden Rapid Prototyping Verfahrens, wie beispielsweise durch 3D-Druck/Lasersintern, hergestellt wurde.

4. Umfaltkeil (100) nach einem der vorherigen Ansprüche, wobei der Keilwinkel (108) des auslaufseitigen Endes (105) des Umfaltkeils (100) zwischen 3° und 45° liegt.

5. Umfaltkeil (100) nach einem der vorherigen Ansprüche, wobei der Umfaltkeil eine Länge zwischen 200 mm und 400 mm, z.B. eine Länge von 320 mm, aufweist.

6. Umfaltkeil (100) nach einem der vorherigen Ansprüche, wobei der Keilwinkel (108) des auslaufseitigen Endes (105) des Umfaltkeils (100) verschieden ist vom Keilwinkel (110) des einlaufseitigen Endes (104) des Umfaltkeils (100).

7. Umfaltkeil (100) nach einem der vorherigen Ansprüche, wobei das Rollelement (103) oder die Rollelemente (103a, 103b) einen Durchmesser zwischen 8 mm und 25 mm, z.B. 12 mm, aufweisen, und/oder wobei das Rollelement (103) oder die Rollelemente (103a, 103b) eine Breite (114) zwischen 2 mm bis 6 mm, z.B. 2,5 mm, aufweisen.

8. Umfaltkeil (100) nach einem der vorherigen Ansprüche, wobei das Rollelement (103) oder die Rollelemente (103a, 103b) eine Rolloberfläche / Rolloberflächen (11) aufweist mit einem Radius (113) zwischen 0,5 mm und 1,5 mm, z.B. 0,8 mm.

9. Etikettiervorrichtung (300) zur Ausstattung von Gegenständen, z.B. Behältern (313), mit Etikettenhülsen (310), welche aus Folienschläuchen (301) abgetrennt werden, umfassend wenigstens einen Umfaltkeil (304) nach einem der vorherigen Ansprüche.

## Claims

1. Folding wedge (100) for handling foil tubes of a labelling device for labelling articles, e.g. containers, with label sleeves separated from the foil tubes, comprising two rolling elements (103a, 103b) which are each arranged laterally at the outlet end (105) of the folding wedge (100), **characterised in that** the rolling elements are spring-mounted.

2. Folding wedge (100) according to claim 1, wherein the folding wedge (100) has an inlet end (104) opposite the outlet end (105), and wherein the two ends are twisted relative to one another, for example are twisted orthogonally relative to one another.

3. Folding wedge (100) according to any one of the preceding claims, wherein the folding wedge (100) has been manufactured by means of an assembling rapid prototyping process, such as by 3D printing/laser sintering.

4. Folding wedge (100) according to any one of the preceding claims, wherein the wedge angle (108) of the outlet end (105) of the folding wedge (100) lies between 3° and 45°.

5. Folding wedge (100) according to any one of the preceding claims, wherein the folding wedge has a length between 200 mm and 400 mm, e.g. a length of 320 mm.

6. Folding wedge (100) according to any one of the preceding claims, wherein the wedge angle (108) of the outlet end (105) of the folding wedge (100) is different from the wedge angle (110) of the inlet end (104) of the folding wedge (100).

7. Folding wedge (100) according to any one of the preceding claims, wherein the rolling element (103) or the rolling elements (103a, 103b) have a diameter between 8 mm and 25 mm, e.g. 12 mm, and/or wherein the rolling element (103) or the rolling elements (103a, 103b) have a width (114) between 2 mm to 6 mm, e.g. 2.5 mm.

8. Folding wedge (100) according to any one of the preceding claims, wherein the rolling element (103) or the rolling elements (103a, 103b) has a rolling surface / have rolling surfaces (11) with a radius (113) between 0.5 mm and 1.5 mm, e.g. 0.8 mm.

9. Labelling device (300) for labelling articles, e.g. containers (313), with label sleeves (310) which are cut from foil tubes (301), comprising at least one folding wedge (304) according to one of the previous claims.

## Revendications

1. Cale de pliage (100) pour manipuler des tubes de film d'un dispositif d'étiquetage pour doter des objets, par exemple des récipients, avec des manchons d'étiquettes séparés des tubes de film, comprenant deux éléments de roulement (103a, 103b) qui sont agencés respectivement latéralement au niveau de l'extrémité côté sortie (105) de la cale de pliage (100),
**caractérisée en ce que**
les éléments de roulement sont montés de manière élastique.

2. Cale de pliage (100) selon la revendication 1, dans laquelle la cale de pliage (100) présente une extrémité côté entrée (104) opposée à l'extrémité côté sortie (105), et dans laquelle les deux extrémités sont tournées l'une par rapport à l'autre, par exemple sont tournées orthogonalement l'une par rapport à l'autre.

3. Cale de pliage (100) selon l'une quelconque des revendications précédentes, dans laquelle la cale de pliage (100) a été fabriquée au moyen d'un procédé de prototypage rapide établi, comme par exemple par impression 3D/frittage laser.

4. Cale de pliage (100) selon l'une quelconque des revendications précédentes, dans laquelle l'angle de cale (108) de l'extrémité côté sortie (105) de la cale de pliage (100) est compris entre 3° et 45°.

5. Cale de pliage (100) selon l'une quelconque des revendications précédentes, dans laquelle la cale de pliage présente une longueur comprise entre 200 mm et 400 mm, par exemple une longueur de 320 mm.

6. Cale de pliage (100) selon l'une quelconque des revendications précédentes, dans laquelle l'angle de cale (108) de l'extrémité côté sortie (105) de la cale de pliage (100) est différent de l'angle de cale (110) de l'extrémité côté entrée (104) de la cale de pliage (100).

7. Cale de pliage (100) selon l'une quelconque des revendications précédentes, dans laquelle l'élément de roulement (103) ou les éléments de roulement (103a, 103b) présentent un diamètre compris entre 8 mm et 25 mm, par exemple 12 mm, et/ou dans laquelle l'élément de roulement (103) ou les éléments de roulement (103a, 103b) présentent une largeur (114) comprise entre 2 mm et 6 mm, par exemple 2,5 mm.

8. Cale de pliage (100) selon l'une quelconque des revendications précédentes, dans laquelle l'élément de roulement (103) ou les éléments de roulement (103a, 103b) présentent une/des surfaces de roulement (11) avec un rayon (113) compris entre 0,5 mm et 1,5 mm, par exemple 0,8 mm.

9. Dispositif d'étiquetage (300) destiné à doter des objets, par exemple des récipients (313), avec des manchons d'étiquettes (310) qui sont séparés des tubes de film (301), comprenant au moins une cale de pliage (304) selon l'une quelconque des revendications précédentes.
